# EUROPÄISCHE PATENTSCHRIFT

(11) **EP 1 937 504 B1**
(45) Veröffentlichungstag und Bekanntmachung des Hinweises auf die Patenterteilung: **19.08.2009**
(21) Anmeldenummer: 06806082.1
(22) Anmeldetag: 06.10.2006
(51) Int. Cl.: B60K 25/00, F16H 59/00

(54) **LANDWIRTSCHAFTLICHES MOBILFAHRZEUG**
MOBILE AGRICULTURAL VEHICLE
VEHICULE MOBILE AGRICOLE

(30) Priorität: 21.10.2005 DE 102005050544
(43) Veröffentlichungstag der Anmeldung: 02.07.2008
(73) Patentinhaber: ZF Friedrichshafen AG, 88038 Friedrichshafen (DE)
(72) Erfinder: PREBECK, Stefan, A-4400 Steyr (AT); SCHACHNER, Kurt, A-3352 St. Peter/Au (AT)
(86) Internationale Anmeldenummer: PCT/EP2006/009674
(87) Internationale Veröffentlichungsnummer: WO 2007/045362

(56) Entgegenhaltungen:
- DE-A1- 10 249 757
- DE-B3- 10 250 694

## Beschreibung

Die Erfindung betrifft ein landwirtschaftliches Mobilfahrzeug nach der im Oberbegriff von Anspruch 1 näher definierten Art.

Die DE 102 49 757 A1 offenbart ein landwirtschaftliches Nutzfahrzeug, bei welchem Anbaugeräte anbaubar sind, wobei das Fahrzeug einen CAN-Bus aufweist, über welchen Daten- und Informationsaustausch innerhalb des Fahrzeugs stattfinden, und welches einen ISO-Bus aufweist, über welchen Daten- und Informationsaustausch zwischen dem Fahrzeug und dem Anbaugerät stattfinden. Bei der Nutzung von Anbaugeräten wird die Signalweiterleitung über den ISO-Bus ohne vorherige Aktivierung bzw. Umgehung von Aktuatoren realisiert. Dadurch besteht die Möglichkeit, die Steuergeräte der Anbaugeräte auch mittels der am landwirtschaftlichen Fahrzeug angeordneten Außentaster zu bedienen.

Der vorliegenden Erfindung liegt die Aufgabe zugrunde, ein landwirtschaftliches Mobilfahrzeug zu schaffen, bei welchem der Fahrer über ein einziges Anzeige- und Steuergerät das Fahrzeug und die Anbaugeräte steuern kann.

Die Aufgabe wird mit einem, auch die kennzeichnenden Merkmale des Hauptanspruchs aufweisenden, gattungsgemäßen landwirtschaftlichen Mobilfahrzeug gelöst.

Erfindungsgemäß weist das Mobilfahrzeug einen CAN-Bus auf, über welchen Daten- und Informationsaustausch innerhalb des Fahrzeugs erfolgen, und einen ISO-Bus auf, über welchen ein Anzeigegerät mit einer elektronischen Steuereinheit in Verbindung bringbar ist, wobei auf der elektronischen Steuereinheit Getriebedaten abgelegt sind, welche auf dem Anzeigegerät angezeigt werden. Diese im elektronischen Steuergerät des Getriebes abgelegten Daten werden auch als Working-Set bezeichnet und können vorzugsweise aus den aktuellen Daten der Drehzahl des Antriebs des Getriebes den Drehzahlen des Abtriebs des Getriebes und bei leistungsverzweigten hydrostatischmechanischen Getrieben den Drehzahlen der Hydrostaten bestehen. Des weiteren besteht die Möglichkeit, aktuelle Getriebeübersetzungen anzuzeigen sowie Ölwechselintervalle und die Restlebensdauer von Bauteilen. Es besteht auch die Möglichkeit, aus dem Getriebesteuergerät erweiterte Fehleranzeigen auf diesem Anzeigegerät anzuzeigen. Das Anzeigegerät wird auch als ISO-Bus-Terminal bezeichnet und weist neben der Bildschirmanzeige Mittel zur Eingabe auf. Dies kann beispielsweise direkt über den Bildschirm durch einen sogenannten Touch-Screen erfolgen, vorzugsweise weist das Anzeigegerät aber noch zusätzlich neben dem Bildschirm angeordnete Druckknöpfe und Drehregler auf.

In einer weiteren Ausgestaltungsform der Erfindung weist das Anzeigegerät eine serielle Schnittstelle auf, über welche neue Programme oder Upgrads der Getriebesteuerung über den ISO-Bus auf die elektronische Steuereinheit des Getriebes aufgespielt werden können.

In einer weiteren Ausgestaltungsform der Erfindung besteht die Verbindung zwischen dem Anzeigegerät und dem elektronischen Steuergerät des Getriebes aus der CAN-Bus-Verbindung des Fahrzeugs und einer elektronischen Steuereinheit, einer sogenannten Bridge-ECU, wodurch das Anzeigegerät ebenfalls mit der elektronischen Steuereinrichtung des Getriebes in Verbindung steht. Über die Eingabemittel am Anzeigegerät, beispielsweise den Druckknöpfen und Drehreglern, besteht die Möglichkeit, einen Drehregler als Drückungspotentiometer für die elektronische Steuereinrichtung des Getriebes, einen Drehregler als Stellgröße für die Geschwindigkeit, beispielsweise einen Tempomat, einen Druckknopf zur Kalibrierung des Systems und über den Touch-Screen, beispielsweise Code-Eingaben zur Freischaltung von speziellen Getriebefunktionen, zu verwenden.

Durch die Verbindung der elektronischen Steuereinheit des Getriebes über den ISO-Bus mit dem ISO-Bus-Terminal werden keine zusätzlichen Bedienelemente für die Feinabstimmung des Motor-Getriebe-Managements in der Kabine des landwirtschaftlichen Mobilfahrzeugs mehr benötigt, und es entfallen Anzeigegeräte für getriebespezifische Informationen, die dem Fahrer nicht ständig zur Verfügung stehen müssen.

## Patentansprüche

1. Landwirtschaftliches Mobilfahrzeug mit einer elektronischen Steuereinheit für das Getriebe, welches das Fahrzeug im Sinne einer Fahrbewegung antreibt, bei welchem Daten- und Informationsaustausch innerhalb des Fahrzeugs über CAN-Bus und Daten- und Informationsaustausch zwischen dem Fahrzeug und einem Anbaugerät über ISO-Bus erfolgen, mit einem Anzeigegerät, welches über den ISO-Bus mit der elektronischen Steuereinheit in Verbindung bringbar ist, **dadurch gekennzeichnet, dass** das Anzeigegerät über den ISO-Bus mit der elektronischen Steuereinheit des Getriebes in Verbindung steht, wobei auf der elektronischen Steuereinheit des Getriebes Betriebsdaten des Getriebes abgelegt sind, welche auf dem Anzeigegerät angezeigt werden, und das Anzeigegerät Eingabemittel aufweist, über welche Daten in der elektronischen Steuereinheit des Getriebes veränderbar sind.

2. Landwirtschaftliches Mobilfahrzeug nach Anspruch 1, **dadurch gekennzeichnet, dass** am Anzeigegerät aktuelle Daten, wie die Antriebsdrehzahl, die Abtriebsdrehzahl, die Drehzahl von Hydrostaten, die Getriebeübersetzungen, Ölwechselintervalle und Restlebensdauer von Bauteilen sowie erweiterte Fehleranzeigen, ausgegeben werden.

3. Landwirtschaftliches Mobilfahrzeug nach Anspruch 1, **dadurch gekennzeichnet, dass** über die Eingabemittel am Anzeigegerät Daten, wie die Soll-Geschwindigkeit, Drückungseinstellungen des Verbrennungsmotors und Kalibrierungen, eingebbar sind.

4. Landwirtschaftliches Mobilfahrzeug nach Anspruch 1, **dadurch gekennzeichnet, dass** die Steuereinheit des Getriebes direkt über den ISO-Bus oder über den CAN-Bus des Fahrzeugs und einer Bridge-ECU mit dem Anzeigegerät in Verbindung steht.

5. Landwirtschaftliches Mobilfahrzeug nach Anspruch 1, **dadurch gekennzeichnet, dass** das Anzeigegerät eine serielle Schnittstelle aufweist, über welche Programme auf die Steuereinheit des Getriebes übertragbar sind.

## Claims

1. Agricultural vehicle having an electronic control unit for the gear mechanism which drives the vehicle in the sense of a locomotion movement and in which data and information are exchanged within the vehicle via CAN bus and data and information are exchanged between the vehicle and an implement via ISO bus, having a display device which can be connected to the electronic control unit via the ISO bus, **characterized in that** the display device is connected to the electronic control unit of the gear mechanism via the ISO bus, wherein operating data of the gear mechanism are stored on the electronic control unit of the gear mechanism, which operating data are displayed on the display device, and the display device has input means which can be used to modify data in the electronic control unit of the gear mechanism.

2. Agricultural vehicle according to Claim 1,
**characterized in that** up-to-date data, such as the rotational speed of the drive, the output speed, the rotational speed of hydrostats, the transmission ratios, oil changing intervals and residual service life of components as well as extended fault displays, are output on the display device.

3. Agricultural vehicle according to Claim 1,
**characterized in that** data such as the setpoint speed, overloading of the internal combustion engine and calibrations can be input using the input means on the display device.

4. Agricultural vehicle according to Claim 1,
**characterized in that** the control unit of the gear mechanism is connected directly to the display device via the ISO bus or via the CAN bus of the vehicle and a bridge ECU.

5. Agricultural vehicle according to Claim 1,
**characterized in that** the display device has a serial interface via which programs can be transmitted to the control unit of the gear mechanism.

## Revendications

1. Véhicule agricole mobile comprenant une unité de commande électronique du mécanisme de transmission qui entraîne le véhicule dans le sens d'un mouvement de déplacement, l'échange de données et d'informations à l'intérieur du véhicule s'effectuant par le biais d'un bus CAN et l'échange de données et d'informations entre le véhicule et un appareil rapporté par le biais d'un bus ISO, comprenant un module d'affichage qui peut être mis en liaison avec l'unité de commande électronique par le biais du bus ISO, **caractérisé en ce que** le module d'affichage est en liaison par le biais du bus ISO avec l'unité de commande électronique du mécanisme de transmission, des données opérationnelles du mécanisme de transmission étant stockées sur l'unité de commande électronique du mécanisme de transmission, lesquelles sont affichées sur le module d'affichage, et le module d'affichage présentant des moyens de saisie par le biais desquels peuvent être modifiées les données dans l'unité de commande électronique du mécanisme de transmission.

2. Véhicule agricole mobile selon la revendication 1, **caractérisé en ce que** des données actuelles telles que la vitesse de rotation du mécanisme d'entraînement, la vitesse de rotation du mécanisme de sortie, la vitesse de rotation des hydrostats, les rapports de démultiplication du mécanisme de transmission, les intervalles de vidange d'huile et la durée de vie restante de composants ainsi que des indications de défaut étendues sont délivrées sur le module d'affichage.

3. Véhicule agricole mobile selon la revendication 1, **caractérisé en ce que** des données telles que la vitesse de consigne, des réglages de surcharge du moteur à combustion interne et des calibrages peuvent être saisies par le biais des moyens de saisie sur le module d'affichage.

4. Véhicule agricole mobile selon la revendication 1, **caractérisé en ce que** l'unité de commande du mécanisme de transmission est en liaison avec le module d'affichage directement par le biais du bus ISO ou par le biais du bus CAN du véhicule et une ECU passerelle.

5. Véhicule agricole mobile selon la revendication 1, **caractérisé en ce que** le module d'affichage présente une interface série par le biais de laquelle des programmes peuvent être transmis à l'unité de commande du mécanisme de transmission.
